Europäisches Patentamt

European Patent Office

Office européen des brevets

(11) Veröffentlichungsnummer: **0 097 320**
**B1**

(12) EUROPÄISCHE PATENTSCHRIFT

(45) Veröffentlichungstag der Patentschrift: **30.09.87**

(51) Int. Cl.⁴: **F 02 B 19/16**

(21) Anmeldenummer: **83105843.3**

(22) Anmeldetag: **15.06.83**

(54) Vor- oder Wirbelkammer für Verbennungsmotoren.

(30) Priorität: **18.06.82 DE 3222815**
**29.01.83 DE 3303048**

(43) Veröffentlichungstag der Anmeldung:
**04.01.84 Patentblatt 84/01**

(45) Bekanntmachung des Hinweises auf die
Patenterteilung:
**30.09.87 Patentblatt 87/40**

(84) Benannte Vertragsstaaten:
**AT BE CH DE FR GB IT LI LU NL SE**

(56) Entgegenhaltungen:
**BE-A- 551 993**
**DE-A-1 751 606**
**DE-A-2 550 885**
**DE-A-2 700 120**
**DE-A-2 804 562**
**DE-C- 864 173**
**FR-A-1 260 111**
**GB-A-1 534 761**
**GB-A-2 055 965**
**US-A-2 520 378**

**PATENTS ABSTRACTS OF JAPAN, Band 5, Nr.
139(M-86)(811), 3. September 1981**

**PATENTS ABSTRACTS OF JAPAN, Band 5, Nr.
72(M-68)(744), 14. Mai 1981**

(73) Patentinhaber: **Feldmühle Aktiengesellschaft
Fritz-Vomfelde-Platz 4
D-4000 Düsseldorf 11 (DE)**

(72) Erfinder: **Dworak, Ulf, Dr. Dipl. Mineraloge
Pfarrstrasse 50
D-7066 Baltmannsweiler 2 (DE)**
Erfinder: **Olapinski, Hans, Dr. Dipl.-Chem.
Talstrasse 12
D-7307 Aichwald 1 (DE)**
Erfinder: **Fingerle, Dieter, Dr. Dipl.-Ing.
Kirchheimer Strasse 34
D-7311 Hochdorf (DE)**
Erfinder: **Krohn, Ulrich, Dr. Dipl.-Ing.
Friedrich-Haug-Strasse 5
D-7520 Leonberg (DE)**

Courier Press, Leamington Spa, England.

**Beschreibung**

Die Erfindung betrifft eine Vor- oder Wirbelkammer eines Verbrennungsmotors, bei der Seitenwände und ggf. Unterseite des Innenraums eine aus keramischem Werkstoff bestehende Wärmeisolierung aufweisen.

Wirbel- bzw. Vorkammern haben in einigen Punkten übereinstimmende Funktionen, so daß in der nachfolgenden Beschreibung ausschließlich der Begriff Wirbelkammer Verwendung findet. Die Erfindung ist aber nicht auf Wirbelkammern beschränkt, sondern betrifft in gleicher Weise auch Vorkammern.

An Wirbelkammern werden höchste Anforderungen gestellt, wobei die Anforderungen sich zum Teil widersprechen. Wirbelkammern sollen neben einer guten mechanischen Festigkeit auch bei hohen Temperaturen formbeständig, korrosions- und erosionsbeständig sein. Im Zuge der Entwicklung von Motoren mit einem verbesserten Wirkungsgrad wurde auch bereits die Forderung erhoben, die Wirbelkammer gegenüber den weiter vom Verbrennungsraum entfernt liegenden Motorteilen so zu isolieren, daß möglichst geringe Wärmeverluste entstehen und infolge der dadurch in der Wirbelkammer höheren Temperatur eine verbesserte Verbrennung des Kraftstoffs ermöglicht wird. Beim Dieselmotor wird von einer gut isolierten Wirbelkammer zusätzlich noch eine geringere Vorglühzeit und ein besseres Kaltstartverhalten erwartet.

Die bisher bekannten Wirbelkammern weisen noch gewisse Nachteile auf und konnten die erhobenen Forderungen nur zum Teil erfüllen. Aus hochtemperaturbeständigen Stählen oder Legierungen, wie z.B. aus mit Nickelzusatz hergestelltem Stahl bestehende Wirbelkammern haben zwar bereits eine relativ geringe Wärmeleitfähigkeit, jedoch wird die Isolierwirkung noch nicht als ausreichend angesehen.

Aus der offengelegten JP—A—52—131010 ist bereits eine Wirbelklammer bekannt, deren Seitenwände teilweise mit einer wärmeisolierenden Abdeckung versehen sind. Das wärmeisolierende Material befindet sich dabei in einer in den Seitenwänden vorgesehenen, ringförmigen Nut, so daß ein Teil der Seitenwände und der gesamte Boden der Wirbelkammer nicht wärmeisoliert sind und noch eine relativ große Wärmeabgabe an die benachbarten Motorteile erfolgt. Ein weiterer Nachteil liegt in der bekannten Problematik, die sich aus der unterschiedlichen thermischen Ausdehnung verschiedener Werkstoffe ergibt.

Weitere, ältere Vorschläge, wie sie in der DE—C—86 41 73 und der DE—C—87 55 90 enthalten sind, sehen eine Umhüllung mit einer wärmeisolierenden Schicht einer in den Zylinderkopf eingegossenen Wirbelkammer vor. Auch diese vorgeschlagenen Beschichtungen aus Graphit oder aus ein Bindemittel enthaltenden keramischen Stoffen weisen die Nachteile auf, die immer dann auftreten, wenn mit keramischen Werkstoffen beschichtete Metallteile thermisch beansprucht werden. Infolge der unterschiedlichen thermischen Ausdehnungskoeffizienten von Metall und Keramik kommt es zur Rissbildung innerhalb der keramischen Beschichtung und damit zum Abplatzen der wärmeisolierenden Schicht.

Auch eine aus der DE—A—28 04 562 bekannte Wirbelkammer, die aus einer zweigeteilten metallenen Kammer als Träger für eine keramische Beschichtung besteht, weist diese bekannten Nachteile auf. Da der eigentliche Brennraum dieser Wirbelkammer durch eine auf die keramische Auskleidung aufgetragene weitere Beschichtung aus katalytischem Material, wie z.B. Platin oder Rhodium besteht, resultiert die oben beschriebene Gefahr des Abplatzens von Metall/Keramikverbindungen bei dieser bekannten Wirbelkammer gleich in zweifacher Hinsicht. Ein weiterer Nachteil besteht in der komplizierten Herstellung dieser Wirbelkammer, da zunächst die beiden Teile der Metallkammer hergestellt werden müssen, diese mit der keramischen Auskleidung zu versehen sind und diese vor Auftrag der katalytischen Schicht auf ihrer Oberfläche zu bearbeiten sind.

Wie aus der DE—A—30 28 440 hervorgeht, wurde auch bereits eine nur aus keramischem Werkstoff bestehende Wirbelkammer mit einer schalenförmig gesinterten Innenwandung aus z.B. Siliziumcarbid vorgeschlagen. Diese bekannte Wirbelkammer ermöglicht zwar die Verwendung von weniger kostspieligen Rohstoffen als die bekannten hochtemperaturbeständigen Stähle oder Legierungen und weist auch eine hervorragende Erosions- und Korrosionsbeständigkeit auf, andererseits ist die Isolierwirkung von Siliziumcarbid infolge seiner guten Wärmeleitfähigkeit sehr gering, so daß beträgliche Wärmeverluste und damit eine geringe Kraftstoffausnutzung die Folge sind. Einen entgegengesetzten Vorschlag enthält die DE—A—25 50 885. Dort wird eine Wirbelkammer vorgeschlagen, die auf ihrer inneren Oberfläche mit einer Beschichtung aus einem keramischen Werkstoff, vorzugsweise aus Zirkoniumoxid, versehen ist. Der Nachteil dieses Vorschlags besteht darin, daß infolge der sehr dünnen Beschichtung die isolierende Wirkung trotz der an sich geringen Wärmeleitfähigkeit von Zirkoniumoxid gering bleibt und daß andererseits infolge der geringen Wärmeleitfähigkeit des verwendeten keramischen Materials der Spritzstrahl der Einspritzpumpe auf eine nicht optimal aufgeheizte innere Oberfläche der Wirbelkammer trifft.

Die Erfindung will diese bestehenden Nachteile überwinden und hat die Aufgabe, eine Wirbelkammer zu entwickeln, die neben den allgemein geforderten Eigenschaften, wie gute mechanische Festigkeit, insbesondere auch bei thermischer Belastung, Erosions-, Korrosionsbeständigkeit und Hochtemperaturbeständigkeit, eine gute Isolierwirkung hat und dabei trotzdem auf ihrer inneren Oberfläche eine gute Wärmeleitfähigkeit aufweist und damit nur in geringem Maße eine lokale Auskühlung am Auftreffpunkt des Kraftstoffstrahles zuläßt. Die Erfindung will damit eine bessere Brennstoffausnutzung und beim Diesel-motor ein besseres Kaltstartverhalten ermögli-chen.

Zur Lösung dieser Aufgabe sieht die Erfindung bei einer Vor- oder Wirbelkammer der eingangs beschriebenen Art die kennzeichnenden Merkmale von Anspruch 1 vor.

Der Vorteil der erfindungsgemäßen Wirbelkammer liegt zunächst darin, daß es durch die geringe Wärmeleitfähigkeit der Werkstoffe Aluminiumtitanat und Zirkoniumoxid, aus denen der äußere Formkörper besteht zu einer starken Isolierung des inneren Formkörpers kommt und damit der Wärmeabgang der im Innenraum der Wirbelkammer herrschenden Temperatur in erheblicher Weise vermindert wird. Ein weiterer Vorteil liegt darin, daß es infolge der hohen Wärmeleitfähigkeit des zur Herstellung des inneren Formkörpers verdeneten Werkstoffe nur zu einer geringfügigen Auskühlung des Punktes kommt, auf den der kalte Kraftstoffstrahl trifft, da die hohe Wärmeleitfähigkeit dieses Bauteils einen weitgehenden Temperaturausgleich auf der inneren Oberfläche des Basisteils bewirkt.

Sofern in der Beschreibung und den Ansprüchen der Begriff Wärmeleitfähigkeit verwendet ist, so ist darunter die Wärmeleitfähigkeit bei Raumtemperatur zu verstehen.

Durch den Kunstgriff, die Wärmeisolierung und das den Innenraum der Wirbelkammer aufweisende Bauteil aus separaten, miteinander montierbaren Formkörpern herzustellen und diese durch Kleben oder Schrumpfen miteinander zu verbinden, liegt der entschiedene Vorteil der vorliegenden Erfindung jedoch darin, daß sie die Nachteile vermeidet, die bei den bekannten Wirbelkammern aus der Nichtübereinstimmung der thermischen Ausdehnungskoeffizienten von Metallen und keramischen Werkstoffen entstehen, wenn metallische Bauteile Träger einer keramischen Beschichtung sind.

In konstruktiver Hinsicht sind verschiedene Ausführungen der erfindungsgemäßen Wirbelkammer hinsichtlich der Wärmeisolierung des inneren Formkörpers möglich. Eine bevorzugte Ausführungsform, bei der lediglich die seitlichen Wände des inneren Formkörpers von einem aus keramischem Werkstoff bestehenden äußeren Formkörper umgeben sind, sieht vor, daß der äußere Formkörper auf einem Bund des einen Sockel aufweisenden inneren Formkörpers sitzt.

Um einen besonders festen Sitz der beiden Bauteile zu gewährleisten, sieht eine weitere bevorzugte Ausführungsform vor, daß der innere Formkörper an seiner Unterseite eine Stufe aufweist und auf innenliegenden Schultern des äußeren Formkörpers aufsitzt.

Ganz besonders bevorzugt ist jedoch eine Bauform, bei der die seitlichen Wände und die Unterseite des inneren Formkörpers von einem die Wärmeisolierung bildenden äußeren Formkörper umgeben sind. Dieses garantiert sowohl eine feste Verbindung als auch eine starke Isolierwirkung.

In einer besonders bevorzugten Ausführungsform ist die erfindungsgemäße Wirbelkammer dadurch gekennzeichnet, daß der äußere Formkörper aus einem keramischen Werkstoff, dessen Wärmeleitfähigkeit < 3 W/(m·K) beträgt, hergestellt ist und daß der innere Formkörper aus einem Werkstoff besteht, dessen Wärmeleitfähigkeit · 50 W/(m·K) beträgt.

In einer weiteren bevorzugten Ausführungsform besteht die hochwarmfeste Legierung des inneren Formkörpers aus 57 bis 75 Gew.% Nickel, bis 20 Gew.% Chrom, zwischen 0 und 18 Gew.% Kobalt, bis zu 1,5 Gew.% Aluminium und bis zu 2,4 Gew.% Titan enthält, wobei die Anteile sich auf 100 Gew.% ergänzen.

Wegen der erhöhten Erosions- und Korrosionsbeständigkeit sind keramische Werkstoffe jedoch gesonders bevorzugt. Besonders geeignet ist gesintertes Siliziumkarbid, das höchste Erosions- und Korrosionsbeständigkeit mit hohen Thermoschockbeständigkeit und einer für die Zwecke der Erfindung hervorragenden Wärmeleitfähigkeit größer 50 W/(m·K) verbindet.

Von den zur Herstellung des äußeren Formkörpers vorgesehenen Werkstoffen ist gesintertes Aluminiumtitanat, weil sich dabei die Möglichkeit ergibt, die erfindungsgemäße Wirbelkammer bei der Herstellung des Zylinderkopfes aus Aluminium-bzw. Grauguß direkt mit einzugießen, so daß sie nach Erkalten des Gusses fest im Zylinderkopf sitzt.

Ganz besonders bevorzugt zur Herstellung des äußeren Formkörpers ist wegen der höheren mechanischen Festigkeit jedoch gesintertes Zirkoniumoxid, das eine gleich gute Isolierwirkung aufweist, infolge seiner höheren Festigkeit jedoch die Möglichkeit bietet, die Wirbelkammer im Schiebesitz in den Zylinderkopf einzupassen. Für die Zwecke der Erfindung ist sowohl vollstäbilisiertes als auch teilstabilisiertes Zirkoniumoxid geeignet, wobei es sich als vorteilhaft erwiesen hat, vollstabilisiertes Zirkoniumoxid dann zu verwenden, wenn der innere Formkörper durch Verkleben mit dem äußeren Formkörper verbunden werden soll, während teilstabilisiertes Zirkonium-oxid dann bevorzugt wird, wenn der innere Formkörper in den äußeren Formkörper eingeschrumpft werden soll. Als besonders geeignet hat sich ein Zirkoniumoxid erwiesen, das eine Bruchfestigkeit σb > 300 N/mm² aufweist.

Als eine besonders geeignete Ausführungsform der vorliegenden Erfindung hat sich eine Wirbelkammer erwiesen, bei der der innere Formkörper aus Siliziumcarbid und der äußere Formkörper aus teilstabilisertem Zirkoniumoxid besteht. Bei einer solchen Wirbelkammer ist die hervorragende Isolierwirkung von Zirkoniumoxid mit der hohen Wärmeleitfähigkeit von Siliziumcarbid kombiniert. Gegenüber den bekannten Wirbelkammern aus hochtemperaturbeständigem Stahl ist die Isolierwirkung gegenüber den übrigen Motorteilen bis zu viermal größer, wobei sich der weitere Vorteil ergibt, daß infolge der hohen Wärmeleitfähigkeit des inneren Formkörpers im Inneren der Wirbelkammer ein weitgehender Temperaturausgleich staffindet und es somit zu einer besseren Verwertung des Kraftstoffs kommt.

Die Größe der erfindungsgemäßen Wirbelkammer hängt im wesentlichen von der vorgegebenen Konstruktion des Motors ab, in den die Wirbelkammer eingebaut werden soll. Um eine möglichst hohe Isolierung zu erreichen, soll die Wandstärke des äußeren Formkörpers nicht < 1 mm sein, vorzugsweise beträgt die Wandstärke aber mehr als 2 mm. In bevorzugter Ausführungsform ist die Wirbelkammer so gestaltet, daß die Außenseiten des inneren Formkörpers glatt und ohne Unterbrechung ausgebildet sind und den inneren Formkörper spaltfrei umhüllen. Zur weiteren Verbesserung der Isolierwirkung können aber in den Außenseiten der Seitenwände und auf der Unterseite des inneren Formkörpers Unterbrechungen z.B. in Form von ringförmig verlaufenden Nuten oder anderen Vertiefungen angebracht sein.

Zur Herstellung der erfindungsgemäßen Wirbelkammer hat sich ein Verfahren als besonders geeignet erwiesen, bei dem der äußere Formkörper zur Erreichung eines Schrumpfsitzes erhitzt und über den kalten inneren Formkörper geschoben wird. Nach dem Erkalten ist der innere Formkörper fest in den äußeren Formkörper eingeklemmt. Vorzugsweise ist dabei der äußere Umfang der seitlichen Wände des inneren Formkörpers 0,05 bis 0,3%, ganz besonders bevorzugt 0,1 bis 0,2% größer als der innere Umfang des äußeren Formkörpers vor dem Erhitzen.

Eine weitere bevorzugte Möglichkeit zur Herstellung der erfindungsgemäßen Wirbelkammer, die insbesondere dann bevorzugt wird, wenn der äußere Formkörper aus Zirkonoxid besteht, sieht vor, daß der äußere Formkörper über den auf eine Temperatur unter −200°C abgekühlten inneren Formkörper geschoben wird. Gegebenenfalls kann der äußere Formkörper zusätzlich erhitzt werden.

Bei der Montage einer Wirbelkammer, deren äußerer Formkörper aus Aluminiumtitanat besteht, wird zweckmäßigerweise dieser Körper im Paß- oder Schiebesitz über den inneren Formkörper geschoben. Dabei erhält der innere Formkörper seinen festen Sitz dadurch, daß die fertig montierte Wirbelkammer im Zylinderkopf eingegossen wird.

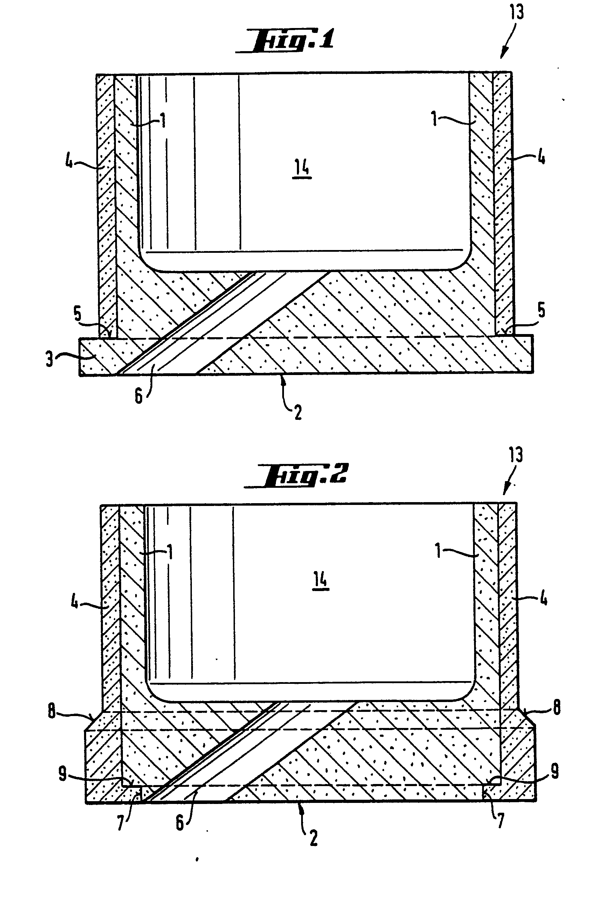

Nachfolgend werden anhand der Figuren 1 bis 4 und der zugehörigen Beschreibung bevorzugte Ausführungsformen der Erfindung und deren Herstellung näher erläutert, ohne daß die Erfindung auf diese Ausführungsbeispiele beschränkt ist. Insbesondere sind die gezeigten Bauformen nicht an die beschriebenen Materialkombinationen gebunden. Auch andere Werkstoffkombinationen sind möglich, sofern sie die erhobene Forderung nach unterschiedlicher Wärmeleitfähigkeit von innerem und äußerem Formkörper erfüllen.

Funktionsgleiche Bauteile sind in den Figuren und der Beschreibung gleichlautend beziffert.

Figur 1 zeigt in einer Schnittdarstellung eine erfindungsgemäße Wirbelkammer, bei der die seitlichen Wände 1 eines aus Siliziumcarbid bestehenden inneren Formkörpers 2 von einem auf dem Bund 5 des Sockels 3 des inneren Formkörpers 2 aufsitzenden äußeren Formkörper 4 aus Zirkonoxid spaltfrei umschlossen werden. Mit 6 ist eine Durchlaßöffnung des inneren Formkörpers 2 bezeichnet.

Herstellung von innerem Formkörper 2 und äußerem Formkörper 4 erfolgen durch Formen und Sintern von üblichem Siliziumcarbid- bzw. Zirkonoxidpulver. Nach entsprechender Oberflächenbearbeitung des inneren Formkörpers 2 mit Diamantkorn auf einen Außendurchmesser von 26,13 mm und des äußeren Formkörpers 4 auf einen Innendurchmesser von 26,10 mm wird der äußere Formkörper 4 auf 400°C erhitzt und über den inneren Formkörper 2 geschoben. Nach dem Erkalten ergibt sich ein fester Schrumpfsitz.

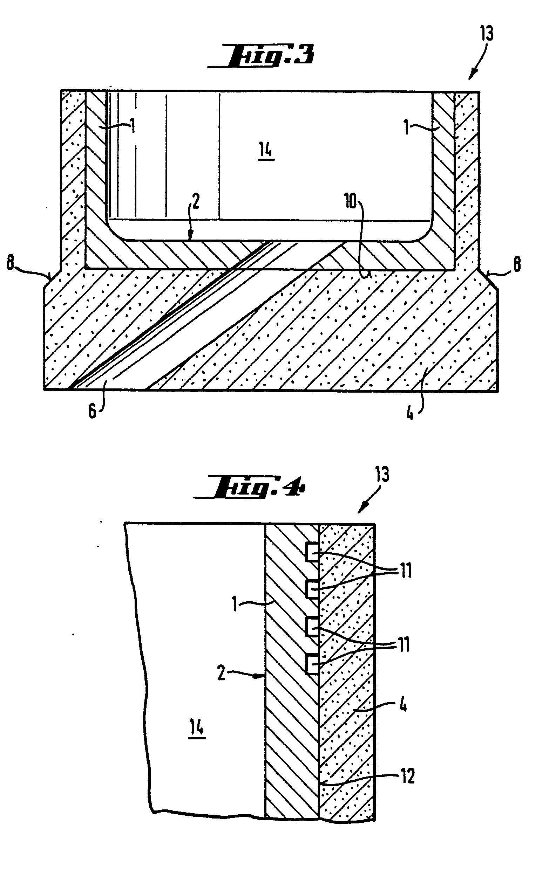

Eine weitere Ausführungsform ergibt sich aus Fig. 2. Bei dieser Ausführungsform wird ein Sinterformkörper aus Zirkonoxid als äußere Formkörper 4 auf einen durch Sintern aus Siliziumcarbid hergestellten inneren Formkörper 2 aufgeschrumpft, wobei der innere Formkörper 2 mit einer Stufe 7 auf Innenschultern 9 des äußeren Formkörpers 4 aufsitzt. Zur Montage im Zylinderkopft sind Außenschultern 8 am äußeren Formkörper 4 vorgesehen. Fertigung und Montage erfolgen wie in Beispiel 1 angegeben.

Die in Figur 3 gezeigte Ausführungsform ist besonders bevorzugt, weil der innere Formkörper 2 auch auf seiner Unterseite 10 von einem äußeren Formkörper 4 abisoliert wird. Der innere Formkörper 2 besteht in diesem Fall aus einer hochwarmfesten Legierung mit der Werkstoff-Nr. 2.4969, wie sie z.B. unter der Handelsmarke Nimonic der britischen Firma Wiggins hergestellt wird. Der äußere Formkörper 4 wurde durch Sintern eines Aluminiumtitanatpulvers hergestellt. Zur Montage wird der äußere Formkörper 4 am Paßsitz über den inneren Formkörper 2 geschoben. Die zusammengesetzte Wirbelkammer wird in einem Zylinderkopf aus Aluminium eingegossen.

Figur 4 zeigt in einer Teilansicht eine weitere vorteilhafte Ausführungsform, bei der in den Außenseiten 12 der seitlichen Wände 1 Ringnuten 11 angebracht sind, durch die eine weiter verstärkte Isolierwirkung erzielt wird.

**Patentansprüche**

1. Vor- oder Wirbelkammer (13) eines Verbrennungsmotors, bei der Seitenwände (1) und ggf. Unterseite (10) des Innenraums (14) eine aus keramischem Werkstoff bestehende Wärmeisolierung aufweisen, dadurch gekennzeichnet, daß die Vor- oder Wirbelkammer (13) aus einem den Innenraum (14) aufweisenden inneren Formkörper (2) aus einer hochwarmfesten Legierung, aus gesintertem Aluminiumoxid, gesintertem Siliziumkarbid oder gesintertem Siliziumnitrid und einem durch Kleben oder Schrumpfen damit verbundenen, die Wärmeisolierung bildenden, äußeren Formkörper (4) aus gesintertem Aluminiumtitanat oder gesintertem Zirkoniumoxid besteht, der den inneren Formkörper (2) zumindest an dessen Seitenwänden (1) umgibt.

2. vor- oder Wirbelkammer nach Anspruch 1, dadurch gekennzeichnet, daß ein die seitlichen Wände (1) des inneren Formkörpers (2) umgebender äußerer Formkörper (4) auf einem Bund (5) eines einen Sockel (3) aufweisenden inneren Formkörpers (2) aufsitzt.

3. Vor- oder Wirbelkammer nach Anspruch 1, dadurch gekennzeichnet, daß der innere Formkörper (2) an seiner Unterseite (10) eine Stufe (7) aufweist und auf Schultern (9) des äußeren Formkörpers (4) aufsitzt.

4. Vor- oder Wirbelkammer nach Anspruch 1, dadurch gekennzeichnet, daß die seitlichen Wände (1) und die Unterseite (10) des inneren Formkörpers (2) von dem äußeren Formkörper (4) umgeben sind.

5. Vor- oder Wirbelkammer nach einem der Ansprüche 1 bis 4, dadurch gekennzeichnet, daß der äußere Formkörper (4) aus einem keramischen Werkstoff mit einer Wärmeleitfähigkeit < 3 W/(m·K) besteht und der innere Formkörper (2) aus einem Werkstoff besteht, dessen Wärmeleitfähigkeit > 50 w/(m·K) ist.

6. Vor- oder Wirbelkammer nach einem der Ansprüche 1 bis 4, dadurch gekennzeichnet, daß die hochwarmfeste Legierung zwischen 57 und 75 Gew.% Nickel, bis 20 Gew.% Chrom, zwischen 0 bis 18 Gew.% Kobalt, bis 1,5 Gew.% Aluminium und bis 2,4 Gew.% Titan enthält, wobei sich alle Anteile auf 100 Gew.% ergänzen.

7. Vor- oder Wirbelkammer nach Ansprüchen 1—5, dadurch gekennzeichnet, daß das Zirkoniumoxid vollstabilisiert ist.

8. Vor- oder Wirbelkammer nach Ansprüchen 1—5, dadurch gekennzeichnet, daß das Zirkoniumoxid teilstabilisiert ist.

9. Vor- oder Wirbelkammer nach einem der Ansprüche 1 bis 8, dadurch gekennzeichnet, daß der äußere Formkörper (4) aus einem Zirkoniumoxid mit einer Bruchfestigkeit $\sigma$ B > 300 N/mm² besteht.

10. Vor- oder Wirbelkammer nach einem der Ansprüche 1 bis 5 und 7 bis 9, dadurch gekennzeichnet, daß der innere Formkörper (2) aus Siliziumcarbid und der äußere Formkörper (4) aus Zirkonium oxid besteht.

11. Vor oder Wirbelkammer nach einem der Ansprüche 1 bis 10, dadurch gekennzeichnet, daß die Wandstärke des äußeren Formkörpers (4) mindestens 1 mm beträgt.

12. Verfahren zum Herstellen einer Vor- oder Wirbelkammer nach einem der Ansprüche 1 bis 11, dadurch gekennzeichnet, daß zum Erreichen eines Schrumpfsitzes des inneren Formkörpers (2) im äußeren Formkörper (4) der äußere Formkörper (4) erhitzt wird und über den nicht erhitzten inneren Formkörper (2) geschoben wird.

13. Verfahren zur Herstellung einer Vor- oder Wirbelkammer nach Anspruch 12, dadurch gekennzeichnet, daß zum Erreichen eines Schrumpfsitzes der äußere Umfang der seitlichen Wände (1) des inneren Formkörpers (2) 0,05 bis 0,3% größer gewählt wird als der innere Umfang des äußeren Formkörpers (4).

14. Verfahren zur Herstellung einer Vor- oder Wirbelkammer nach einem der Ansprüche 1 bis 11, dadurch gekennzeichnet, daß der äußere Formkörper (4) über den auf eine Temperatur unter −200°C abgekühlten inneren Formkörper (2) gestülpt wird.

**Revendications**

1. Préchambre ou chambre de tourbillonnement (13) d'un moteur à combustion dans laquelle les parois latérales (1) et éventuellement le côté inférieur (10) de la cavité (14) comportant une isolation thermique réalisée en matériau céramique, caractérisée par le fait que la préchambre ou chambre de tourbillonnement (13) est constituée par un corps profilé intérieur (2) renfermant la cavité (14) et réalisée en un alliage résistant aux hautes températures, en oxyde d'aluminium fritté, en carbure de silicium fritté ou en nitrure de silicium fritté et par un corps profilé extérieur raccordé au premier par collage ou frettage, formant l'isolation thermique, réalisé en titanate d'aluminium fritté ou en oxyde de zirconium fritté et entourant le corps profilé intérieur (2) au moins sur ses parois latérales (1).

2. Préchambre ou chambre de tourbillonnement selon la revendication 1, caractérisée par le fait qu'un corps profilé extérieur (4) entourant les parois latérales (1) du corps profilé intérieur (2) prend appui sur une collerette (5) d'un corps profilé intérieur (2) comportant un socle (3).

3. Préchambre ou chambre de tourbillonnement selon la revendication (1), caractérisée par le fait que le corps profilé intérieur (2) comporte sur sa face inférieure (10) un gradin (7) et prend appui sur des épaulements (9) du corps profilé extérieur (4).

4. Préchambre ou chambre de tourbillonnement selon la revendication 1, caractérisée par le fait que les parois latérales (1) et la face inférieure (10) du corps profilé intérieur (2) sont entourées par le corps profilé extérieur (4).

5. Préchambre ou chambre de tourbillonnement selon l'une des revendications 1 à 4, caractérisée par le fait que le corps profilé extérieur (4) est réalisé en un matériau céramique ayant une conductibilité thermique < 3 W/(m·K) et que le corps profilé intérieur (2) est réalisé en un matériau dont la conductibilité thermique est > 50 W/(m·K).

6. Préchambre ou chambre de tourbillonnement selon l'une des revendications 1 à 4, caractérisé par le fait que l'alliage résistant aux hautes températures contient entre 57 et 75% en poids de nickel, jusqu'à 20% en poids de chrome, entre 0 et 18% en poids de cobalt, jusqu'à 1,5% en poids d'aluminium et jusqu'à 2,4% en poids de titane, tous les constituants se complétant à 100% en poids.

7. Préchambre ou chambre de tourbillonnement selon les revendications 1—5, caractérisée par le fait que l'oxyde de zirconium est entièrement stabilisé.

8. Préchambre ou chambre de tourbillonnement selon les revendications 1—5, caractérisée par le fait que l'oxyde de zirconium est partiellement stabilisé.

9. Préchambre ou chambre de tourbillonnement selon l'une des revendications 1 à 8, caractérisée par le fait que le corps profilé extérieur (4) est réalisé en un oxyde de zirconium ayant une résistance à la rupture $\sigma\ B > 300\ N/mm^2$.

10. Préchambre ou chambre de tourbillonnement selon l'une des revendications 1 à 5 et 7 à 9, caractérisée par le fait que le corps profilé intérieur (2) est réalisé en carbure de silicium et le corps profilé extérieur (4) en oxyde de zirconium.

11. Préchambre ou chambre de tourbillonnement selon l'une des revendications 1 à 10, caractérisée par le fait que l'épaisseur des parois du corps profilé extérieur (4) est d'au moins 1 mm.

12. Procédé de fabrication d'une préchambre ou chambre de tourbillonnement selon l'une des revendications 1 à 11, caractérisé par le fait que pour obtenir un ajustement fretté du corps profilé intérieur (2) dans le corps profilé extérieur (4), ou chauffe le corps profilé extérieur (4) et on l'enfile sur le corps profilé intérieur non chauffé.

13. Procédé de fabrication d'une préchambre ou chambre de tourbillonnement selon la revendication 12, caractérisé par le fait que pour obtenir un ajustement fretté, la périphérie externe des parois latérales (1) du corps profilé intérieur (2) est de 0,05 à 0,3% plus grande que la périphérie interne du corps profilé extérieur (4).

14. Procédé de fabrication d'une préchambre ou chambre de tourbillonnement selon l'une des revendications 1 à 11, caractérisé par le fait que l'on enfile le corps profilé extérieur (4) sur le corps profilé intérieur (2) refroidi à une température inférieure à −200°C.

**Claims**

1. Pre-chamber or swirl chamber (13) of a combustion engine, in which the side walls (1) and optionally the underside (10) of the inner chamber (14) have a heat insulation consisting of a ceramic material, characterised in that the pre-chamber or swirl chamber (13) comprises an inner shaped body (2) which has the inner chamber (14) and is made of a high temperature alloy, sintered aluminium oxide, sintered silicon carbide or sintered silicon nitride, and an outer shaped body (4) of sintered aluminium titanate or sintered zirconium oxide which is connected to the inner shaped body (2) by adhesion or shrinkage and forms the heat insulation, which outer shaped body (4) encloses at least the side walls (1) of the inner shaped body (2).

2. Pre-chamber or swirl chamber according to claim 1, characterised in that an outer shaped body (4) which encloses the side walls (1) of the inner shaped body (2) is seated on a collar (5) of an inner shaped body (2) which has a base (3).

3. Pre-chamber or swirl chamber accordng to claim 1, characterised in that the inner shaped body (2) has a step (7) on its underside (10) and is seated on shoulders (9) of the outer shaped body (4).

4. Pre-chamber or swirl chamber according to claim 1, characterised in that the side walls (1) and the underside (10) of the inner shaped body (2) are enclosed by the outer shaped body (4).

5. Pre-chamber or swirl chamber according to any one of claims 1 to 4, characterised in that the outer shaped body (4) is made of a ceramic material having a thermal conductivity of $< 3\ W/(m\cdot K)$ and the inner shaped body (2) is made of a material whose thermal conductivity is $> 50\ W/(m\cdot K)$.

6. Pre-chamber or swirl chamber according to any one of claims 1 to 4, characterised in that the high temperature alloy contains from 57 to 75% by weight of nickel, up to 20% by weight of chromium, from 0 to 18% by weight of cobalt, up to 1.5% by weight of aluminium and up to 2.4% by weight of titanium, all parts adding up to 100% by weight.

7. Pre-chamber or swirl chamber according to claims 1 to 5, characterised in that the zirconium oxide is completely stabilised.

8. Pre-chamber or swirl chamber according to claims 1 to 5, characterised in that the zirconium oxide is partially stabilised.

9. Pre-chamber or swirl chamber according to any one of claims 1 to 8, characterised in that the outer shaped body (4) is made of a zirconium oxide having a breaking strength $\sigma\ B > 300\ N/mm^2$.

10. Pre-chamber or swirl chamber according to any one of claims 1 to 5 and 7 to 9, characterised in that the inner shaped body (2) is made of silicon carbide and the outer shaped body (4) is made of zirconium oxide.

11. Pre-chamber or swirl chamber according to any one of claims 1 to 10, characterised in that the wall thickness of the outer shaped body (4) is at least 1 mm.

12. Method for the manufacture of a pre-chamber or swirl chamber according to any one of claims 1 to 11, characterised in that, in order to achieve a shrink fit of the inner shaped body (2) in the outer shaped body (4), the outer shaped body (4) is heated and is pushed over the unheated inner shaped body (2).

13. Method for the manufacture of a pre-chamber or swirl chamber according to claim 12, characterised in that, in order to achieve a shrink fit, the outer circumference of the side walls (1) of the inner shaped body (2) is chosen to be from 0.05 to 0.3% larger than the inner circumference of the outer shaped body (4).

14. Method for the manufacture of a pre-chamber or swirl chamber according to any one of claims 1 to 11, characterised in that the outer shaped body (4) is placed over the inner shaped body (2) which has been cooled to a temperature below −200°C.

## Fig.1

## Fig.2

## Fig.3

## Fig.4